# EUROPÄISCHE PATENTSCHRIFT

(11) **EP 1 437 015 B1**
(45) Veröffentlichungstag und Bekanntmachung des Hinweises auf die Patenterteilung: **31.12.2008**
(21) Anmeldenummer: 01274616.0
(22) Anmeldetag: 19.10.2001
(51) Int. Cl.: H04Q 7/22, H04L 12/18

(54) **VERFAHREN UND EIN MOBIL-KOMMUNIKATIONSNETZ ZUR BEREITSTELLUNG VON MULTICAST- UND/ODER BROADCASTDIENSTEN**
METHOD AND MOBILE COMMUNICATION NETWORK FOR PROVIDING MULTICAST AND/OR BROADCASTING SERVICES
PROCEDE ET RESEAU DE COMMUNICATION MOBILE POUR LA MISE A DISPOSITION DE SERVICES MULTIDESTINATIONS ET/OU DE DIFFUSION

(43) Veröffentlichungstag der Anmeldung: 14.07.2004
(60) Teilanmeldung: 08015648.2
(73) Patentinhaber: SIEMENS AKTIENGESELLSCHAFT, 80333 München (DE)
(72) Erfinder: MADEMANN, Frank, 13189 Berlin (DE)
(86) Internationale Anmeldenummer: PCT/DE2001/004037
(87) Internationale Veröffentlichungsnummer: WO 2003/039167

(56) Entgegenhaltungen:
- EP-A- 1 071 296
- WO-A-00/51373
- WO-A-00/57601
- WO-A-99/49686
- KHALDOUN AL AGHA ET AL: "DYNAMIC SLOT ALLOCATION FOR MULTICASTING IN GPRS SYSTEMS" VTC 2000-SPRING. 2000 IEEE 51ST. VEHICULAR TECHNOLOGY CONFERENCE PROCEEDINGS. TOKYO, JAPAN, MAY 15-18, 2000, IEEE VEHICULAR TECHNOLGY CONFERENCE, NEW YORK, NY: IEEE, US, Bd. 3 OF 3. CONF. 51, 15. Mai 2000 (2000-05-15), Seiten 2355-2359, XP000968425 ISBN: 0-7803-5719-1
- HUTCHINSON 3G: "Architectural considerations for MBMS" 3GPP TSG SA WG2 #19, S2-012137, [Online] 27. August 2001 (2001-08-27), - 31. August 2001 (2001-08-31) Seiten 1-8, Gefunden im Internet: URL:http://www.3gpp.org/ftp/tsg_sa/WG2_Arc h/TSGS2_19/tdocs/> [gefunden am 2006-04-10]
- LUCENT TECHNOLOGIES: "Support of Multicast Services" 3GPP TSG SA WG2 #19, S2-012220, [Online] 27. August 2001 (2001-08-27), - 31. August 2001 (2001-08-31) Seiten 1-5, Gefunden im Internet: URL:http://www.3gpp.org/ftp/tsg_sa/WG2_Arc h/TSGS2_19/tdocs/> [gefunden am 2006-04-10]

## Beschreibung

Die vorliegende Erfindung betrifft ein Verfahren und ein Mobil-Kommunikationsnetz zur Bereitstellung von Multicast- und/oder Broadcastdiensten.
Mobil-Kommunikationsnetze können mit Hilfe von GPRS (General Packet Radio System) oder UMTS (Universal Mobile Telecommunications System) als paketvermittelte Systeme mit weiteren Standarddatennetzen, die auf dem Prinzip der Paketvermittlung beruhen, sogenannte Paketdatennetze, wie z.B. dem Internet, verbunden werden. Der Transport der Daten von einem Paketdatennetz, z.B. dem Internet, über ein GPRS- oder UMTS-Netz bis hin zu einer mobilen Kommunikationseinheit (MS) erfolgt hierbei über mehrere standardisiertes Protokolle, wie etwa dem IP (Internet Protocol). Aus der Fachschrift "Funkschau", 20/99, "IP im Mobilfunk", ist der generelle Aufbau eines GPRS-Mobilfunknetzes bestehend aus insbesondere Serving-GPRS-Support Nodes (SGSN) und Gateway-GPRS Support Nodes (GGSN) bekannt. Von einem öffentlichen paketvermittelten Netz kommende Daten werden mittels Punkt-zu-Punkt-Verbindungen bzw. Dienste (PtP-Dienste - Point-to-Point-Dienste) über einen GGSN zu einem SGSN und weiter zu einer mobilen Kommunikationseinheit übermittelt. In einem derartigen System hat ein SGSN Kontrollfunktionen (betreffend beispielsweise Nutzermobilität, Nutzerautorisierung, Transportdienstkontrolle, Dienstezugriffskontrolle) und Pakettransportfunktionen (wie das Umsetzen von Daten zwischen den Transporttunneln zum GGSN bzw. zum Radionetz). Ein GGSN steuert die Verbindung zwischen einem GPRS-Netzwerk und einem paketdatenorientierten externen Festnetz, z.B. dem Internet. Ein GGSN setzt ferner Datenpakete zwischen einem externen paketvermittelten Festnetz und einem Transporttunnel zwischen GGSN und SGSN um.

Aus der WO 99/49686 ist ein Verfahren zur Übertragung von Punkt-zu-Multipunkt-Diensten (point-to-multipoint services) zu Zellen eines Bestimmungsgebietes bekannt, wobei dem Bestimmungsgebiet ein logischer Name zugewiesen wird.

UMTS und GSM/GPRS stellen einen IP-Multicast-Dienst bereit, der es mobilen Nutzern ermöglicht, Multicast-Daten zu empfangen. Dieser Multicast-Dienst basiert auf Punkt-zu-Punkt-Verbindungen (PtP) zwischen einer mobilen Kommunikationseinheit (MS) und dem GGSN. Die Multicast-Daten kommen z.B. von einem Multicast-Server aus dem Mobil-Kommunikationsnetz oder einem paketorientierten externen Festnetz, z.B. dem Internet. Dieser Multicast-Dienst gewährleistet jedoch keine effiziente Nutzung der zur Verfügung stehenden Ressourcen. Für jede mobile Kommunikationseinheit (MS), die einen bestimmten Multicast-Dienst nutzen möchte, wird über Punkt-zu-Punkt-Verbindungen eine separate Verbindung bis hin zur Multicast-Funktion des GGSN für die jeweilige MC-IP-Adresse aufgebaut und somit der Multicast-Dienst hergestellt.

Ein derart ausgestalteter Multicast-Dienst ist beispielsweise aus der WO 00/57601 bekannt.

Aus dem Dokument "Hutchinson 3G "Architectural considerations for MBMS"; 3GPP TSG-SA WG2, Tdoc S2-012137; 27.08. - 31.08.2001; pages 1 to 8" ist ein Verfahren zur Bereitstellung eines Multicast-Dienstes in einem Mobil-Kommunikationsnetz bekannt, bei dem IP-Multicast-Datenpakete von einem GGSN an einen SGSN über einen "MULTICAST-GTP-TUNNEL" und von dem SGSN an einem Radio Network Controller RNC über einen so genannten "MULTICAST_RAB" übertragen werden.

Das Dokument "Lucent Technologies: "Support of Multicast Services"; 3GPP TSG-SA WG2, #19, Tdoc S2-012220; 27.08. - 31.08.2001; pages 1 to 5" beschreibt eine Architektur zur Unterstützung von Multicast-Diensten, bei der zwischen einem GGSN und einem SGSN GTP-Tunnel zur Datenübertragung verwendet werden.

Eine Aufgabe der Erfindung lag demnach darin, in paketbasierten Netzen die Ressourcennutzung und die Signalisierung bei der Bereitstellung von Multicast- und/oder Broadcast-Diensten zu optimieren.

Diese Aufgabe wird erfindungsmäßig durch das erfindungsgemäße Verfahren gemäß Anspruch 1 und das erfindungsgemäße Mobil-Kommunikationsnetz gemäß Anspruch 14 gelöst. Vorteilhafte Weiterbildungen der Erfindung sind in den entsprechenden Unteransprüchen aufgeführt.

Gemäß Anspruch 1 wird ein Verfahren zur Bereitstellung von Multicast- (MC-) und/oder Broadcast-Diensten eines, ein Radio- und ein Kernnetz umfassenden Mobil-Kommunikationsnetzes bereitgestellt, wobei das Verfahren mindestens die folgenden Schritte aufweist:
a. Übertragen von Multicast- und/oder Broadcast-Daten eines von mindestens einer mobilen Kommunikationseinheit aktivierten Multicast- (MC-) und/oder eines konfigurierten Broadcastdienstes von einer MC-Quelle zu der mindestens einen mobilen Kommunikationseinheit über mindestens einem in dem Kernnetz angeordneten Kommunikationsknoten mittels eines in dem Kommunikationsknoten gespeicherten dienstspezifischen Kontextes (MC Kontext),
b. Steuern und Kontrollieren der Übertragung der Multicast-Daten an die mindestens eine mobile Kommunikationseinheit durch den mindestens einen in dem Kernnetz angeordneten Kommunikationsknoten mittels eines für genau die mindestens eine mobile Kommunikationseinheit in Bezug auf den aktivierten Multicast-Dienst spezifischen und in dem Kommunikationsknoten gespeicherten Kontextes und/oder
c. Broadcasten der Broadcast-Daten des konfigurierten Broadcast-Dienstes in ein definiertes Gebiet.

Die Erfindung verringert die Anzahl der erforderlichen Knoten bzw. die erforderlichen Ressourcen bei der Paketübermittlung von Multicast- und/oder Broadcast-Daten. Dabei sind das Verfahren und das Mobil-Kommunikationsnetz gut integrierbar in die bekannte UMTS und GSM/GPRS-Architektur. Bei dem Kommunikationsknoten in dem Kernnetz handelt es sich im Allgemeinen um einen SGSN eines GSM- oder UMTS-Mobil-Kommunikationsnetzes. Die erfindungsgemäß bereitstellbaren MC-und/oder Broadcast-Dienste sind dabei weitgehend abwärts kompatibel zu UMTS und GSM/GPRS Punkt-zu-Punkt (PtP) IP Diensten. Dies vereinfacht erheblich die Implementierung der entsprechenden Dienste in die bekannten Netzsysteme und unterstützt die Abwärts-Kompatibilität. Bei der MC-Quelle kann es sich dabei um einen MC-Server eines externes Netzes handeln oder um einen MC-Server aus dem Mobil-Kommunikationsnetz.

In einer bevorzugten Ausführungsform des erfindungsgemäßen Verfahrens wird der für die mindestens eine mobile Kommunikationseinheit spezifische Kontext zusätzlich in der mindestens einen mobilen Kommunikationseinheit gespeichert.

Vorzugsweise wird für den für die mindestens eine mobile Kommunikationseinheit spezifische und in dem Kommunikationsknoten gespeicherte Kontext die Form eines spezifischen PDP-Kontextes gewählt (MC PDP Kontext). Dieser für die mindestens eine mobile Kommunikationseinheit in Bezug auf den aktivierten Multicast-Dienst spezifische und in dem in dem Kernnetz angeordneten Kommunikationsknoten gespeicherte Kontext umfasst dabei vorzugsweise alle für den von der mobilen Kommunikationseinheit aktivierten Multicast-Dienst spezifischen Parameter. Dazu zählt beispielsweise ein sogenanntes QoS-Profil oder auch als Dienstequalitätsprofil bezeichnet. Dieses Profil gibt die relevanten Güteparameter, wie beispielsweise Bitrate/Bandbreite, Paketübertragungszeit, Prioritäten, usw. an. Das QoS-Profil zeigt dem im Kernnetz angeordneten Kommunikationsknoten die Übertragungsfähigkeiten der mobilen Kommunikationseinheit an. Ferner enthält der MC PDP Kontext für jeden von der mobilen Kommunikationseinheit aktivierten Multicast-Dienst den Access Point Name (APN). Dieser gibt an, zu welchem Heimatnetzwerk bzw. administrativer Domäne die MC IP Adresse des betreffenden Multicast-Dienstes gehört. Ferner enthält der Kontext die MC IP Adresse des betreffenden MC-Dienstes.

Vorzugsweise wird jedem Multicast- (MC-) und/oder Broadcastdienst eine dienstespezifische, vom prinzipiellen Aufbau auf der bekannten TMSI basierende MC-TMSI zugeteilt. Dies ermöglicht eine Multicast- bzw. Broadcast-Notifikation mit vorhandenen Prozeduren. Diese MC-TMSI ist vorzugsweise ebenfalls in dem MC PDP Kontext der den Dienst in Anspruch nehmenden mobilen Kommunikationseinheiten enthalten.

In einer bevorzugten Ausführungsform des erfindungsgemäßen Verfahrens werden die Multicast- und/oder Broadcast-Daten dienstespezifisch bei der Übertragung vom Kommunikationsknoten zur mobilen Kommunikationseinheit mittels eines dienstespezifischen Verschlüsselungscodes verschlüsselt. Dieser Verschlüsselungscode ist ebenfalls in dem MC PDP Kontext für die mindestens eine mobile Kommunikationseinheit der den Dienst in Anspruch nehmenden mobilen Kommunikationseinheiten als auch in dem im Kommunikationsknoten gespeicherten dienstspezifischen Kontext (MC Kontext) verzeichnet. Entweder werden die Daten direkt von der MC-Quelle verschlüsselt oder der Kommunikationsknoten, d.h. im Allgemeinen der SGSN übernimmt die Aufgabe der Verschlüsselung. Im Falle, dass der Kommunikationsknoten, d.h. der SGSN die Verschlüsselung übernimmt, so sendet er den Verschlüsselungscode an eine mobile Kommunikationseinheit, wenn die mobile Kommunikationseinheit den betreffenden MC-Dienst aktiviert oder wenn eine generelle Aktualisierung ("update") des MC-Dienstes durchgeführt wird. Der Verschlüsselungscode wird dabei vorzugsweise über individuelle PtP Signalisierungskanäle, die bereits durch existierende Verschlüsselungsmechanismen verschlüsselt sind, transferiert. Vorzugsweise wird der Verschlüsselungscode in periodischen Abständen geändert. Da nicht gewährleistet werden kann, dass alle mobilen Kommunikationseinheiten, die den betreffenden MC-Dienst aktiviert haben, gleichzeitig den neuen geänderten Verschlüsselungscode erhalten, werden die MC Daten des betreffenden MC-Dienstes mehrmals parallel verschickt, aber jeweils verschlüsselt mit unterschiedlichem Verschlüsselungscode. Vorzugsweise wird die Verschlüsselung entsprechend IPSec (Internet Protocol Security) vorgenommen.

In einer bevorzugten Ausführungsform des erfindungsgemäßen Verfahrens übernimmt der mindestens eine in dem Kernnetz angeordnete Kommunikationsknoten, d.h. im Allgemeinen der SGSN Registrierungs- und Signalisierungsfunktionen in Bezug auf einen aktivierten Multicast-Dienst.

In einer bevorzugten Ausführungsform des erfindungsgemäßen Verfahrens übernimmt der mindestens eine in dem Kernnetz angeordnete Kommunikationsknoten unter Benutzung von für Punkt-zu-Punkt-Dienste (PtP-Dienste) definierter Mittel Authentifizierungs- und Autorisierungsfunktionen in Bezug auf einen aktivierten Multicast-Dienst. Hierbei kann die vorhandene Struktur von Berechtigungsdaten von PtP Diensten verwendet werden, wenn bestimmte Multicast Dienste dedezierte Berechtigungen erfordern. Die Aktivierung eines MC-Dienstes durch eine mobile Kommunikationseinheit erfolgt durch individuelle Signalisierung zwischen dem Kommunikationsknoten und der mobilen Kommunikationseinheit. Hierbei wird erfindungsgemäß vorzugsweise eine erweiterte PtP-Dienstsignalisierung verwendet, d.h. der Multicast-Dienst wird mittels eines zusätzlichen Elements, dem erweiterten NSAPI (Network Layer Service Access Point Identifier), in der Signalisierung zwischen der mindestens einen mobilen Kommunikationseinheit und dem Kommunikationsknoten aktiviert. Hierbei wird ein optionales Signalisierungselement, nämlich ein erweiterter oder MC NSAPI (Network Layer Service Access Point Identifier), eingeführt. Dieses Signalisierungselement erlaubt eine größere Anzahl parallel aufgebauter PDP-Kontexte, welche durch den Wertebereich des NSAPI begrenzt ist. Dies ist sehr wichtig, wenn eine MS mehrere MC-Dienste parallel nutzt, da zumindest zur Signalisierung jeder MC-Dienst eines mobilen Kommunikationseinheit einen individuellen NSAPI benötigt.

Durch die individuelle Signalisierung eines MC-Dienstes seitens einer mobilen Kommunikationseinheit wird es dem Kommunikationsknoten mittels bereits für PtP-Dienste definierter Mittel möglich, die betreffende mobile Kommunikationseinheit zu authentifizieren. Zudem kann vom Kommunikationsknoten durch Vergleich mit den für die mobile Kommunikationseinheit entsprechenden Berechtigungsdaten im HLR (Home Location Register) überprüft werden, ob die mobile Kommunikationseinheit autorisiert ist, den betreffenden MC-Dienst zu aktivieren und zu nutzen. Die Berechtigungsdaten für einen MC-Dienst im HLR haben die gleiche Struktur wie die entsprechenden Berechtigungsdaten für einen PtP Dienst. Ferner ist es vorzugsweise möglich, den MC-Dienst auch mit normaler herkömmlicher GPRS Berechtigung (im HLR eingetragen) zu nutzen. Welche Art von Berechtigung für die Aktivierung eines bestimmten MC-Dienstes verlangt ist, lässt sich vorzugsweise ableiten aus der MC-IP-Adresse und/oder des APN des betreffenden MC-Dienstes. Im Kommunikationsknoten ist hinterlegt, welche MC-IP-Adresse und/oder welcher APN eine Berechtigung verlangt. Die Nutzung von bekannten CAMEL Funktionalitäten bietet eine weitere Möglichkeit zu überprüfen, ob ein MC-Dienst aktiviert werden kann oder nicht.

Eine mobile Kommunikationseinheit, die MC Daten eines MC-Dienstes erhalten möchte, muss diesen Dienst, wie bereits erläutert, zunächst mittels Signalisierung, die den erweiterten bzw. MC NSAPI enthält, aktivieren. Die Aktivierung des ersten MC-Dienstes für diese mobile Kommunikationseinheit bewirkt, dass ein erster MC PDP Kontext kreiert wird, der im Kommunikationsknoten und in der mobilen Kommunikationseinheit gespeichert wird. Dieser Kontext enthält vorzugsweise, wie bereits erläutert, alle für den betreffenden MC-Dienst und die mobile Kommunikationseinheit spezifischen Parameter. Der Kontext ist mit dem Mobilitätsmanagement (MM) der mobilen Kommunikationseinheit ebenso verknüpft wie ein PDP Kontext, der für einen PtP Dienst verwendet wird. Für jeden weiteren MC-Dienst, der von der mobilen Kommunikationseinheit in der Folgezeit aktiviert und verwendet wird, werden lediglich für diesen weiteren MC-Dienst relevante Daten in dem bereits existierenden MC PDP Kontext im MS und in dem in dem Kernnetz angeordneten Kommunikationsknoten mit aufgenommen. Wird in dem Zuständigkeitsbereich des Kommunikationsknoten ein bestimmter MC-Dienst erstmals aktiviert, so wird ferner ein MC Kontext in dem Kommunikationsknoten kreiert, der vorzugsweise alle für diesen MC-Dienst spezifischen Parameter enthält. Dieser Kontext weist vorzugsweise eine Liste derjenigen mobilen Kommunikationseinheiten auf, die diesen Multicast-Dienst aktiviert haben.
Das bedeutet, dass eine Lieferung von Multicast- und/oder Broadcastdaten mindestens eines Multicast- und/oder Broadcast-Dienstes an mehrere Kommunikationseinheiten (MS) gleichzeitig mittels ein und desselben für den mindestens einen Multicast- und/oder Broadcast-Dienst spezifischen Kontextes (MC Kontext) vollzogen werden kann bzw. ermöglicht wird.

Vorzugsweise steuert sodann der mindestens eine in dem Kernnetz angeordnete Kommunikationsknoten den Auf- und Abbau von Übertragungskanälen des Multicast-Dienstes. Der Kommunikationsknoten initiiert unter anderem beispielsweise die IP-Multicast-Verbindung auf dem IP-Backbone für die betreffende MC IP Adresse.

Über den von PtP Diensten bekannten Parameter "configuration options" können dem Nutzer bzw. der mobilen Kommunikationseinheit noch weitere Informationen, wie beispielsweise der Tarif des MC-Dienstes, zur Verfügung gestellt werden.

Die beschriebene Vorgehensweise im Falle von der Bereitstellung von MC-Diensten ist mit wenigen Abweichungen auch anwendbar zur Bereitstellung von Broadcast Diensten. Zum Zwecke der Bereitstellung von Broadcast Diensten wird jedem Broadcast Dienst dienstespezifisch eine sogenannte MC-TMSI reserviert bzw. zugeteilt, deren Aufbau im Wesentlichen auf einer bekannten TMSI beruht. Jede mobile Kommunikationseinheit, die einen bestimmten Broadcast Dienst nutzen möchte, muss die entsprechenden Signalisierungskanäle überwachen, um Notifikationen (notifications) mit der dem entsprechenden Broadcast Dienst zugeordneten MC-TMSI zu empfangen. Diese MC-TMSIs können beispielsweise in der mobilen Kommunikationseinheit konfiguriert sein. Ferner wird auf jedem Kommunikationsknoten, der den Broadcast Dienst bereitstellt, ein MC Kontext kreiert und abgespeichert, der vorzugsweise alle dienstespezifischen Parameter umfasst. Dieser MC Kontext weist beispielsweise die dem betreffenden Broadcast Dienst zugeordnete MC-TMSI auf, seine IP-MC-Adresse, ein dienstespezifisches QoS Profil für die Übertragungskanäle zwischen dem Kommunikationsknoten und den datenempfangenden mobilen Kommunikationseinheiten und letztlich das Gebiet, in welchem der Broadcast Dienst bereit gestellt wird, was beispielsweise einer Liste von Funkzellen entsprechen kann. Vorzugsweise werden bei der Bereitstellung von Broadcast Diensten nur Radio Ressourcen in denjenigen Zellen genutzt, in denen mobile Kommunikationseinheiten sind, die den betreffenden Broadcast Dienst in Anspruch nehmen wollen.

In Netzwerkstrukturen, die Iu-Flexibility nutzen, ist es möglich, dass mehrere Kommunikationsknoten das gleiche Gebiet bedienen. In diesem Falle können zu einem Gebiet von mehreren Kommunikationsknoten gleichzeitig MC Daten desselben MC-Dienstes kommen. Diese Datenübertragungen werden von dem Radionetz koordniert. Das Radionetz detektiert von der dem betreffenden MC-Dienst zugeordneten MC-TMSI, dass von verschiedenen Kommunikationsknoten kommende Notifikationen von ein und demselben MC-Dienst stammen. Alle Kommunikationsknoten benutzen dabei vorzugsweise denselben MC-TMSI für einen bestimmten MC-Dienst. Das Radionetz bestimmt das Gesamtgebiet, in welchem den betreffenden MC-Dienst in Anspruch nehmende mobile Kommunikationseinheiten sich befindenden anhand der Gebiete, die in den von den verschiedenen Kommunikationsknoten kommenden Notifikationen angezeigt sind. Ferner ist es von Vorteil, als Verschlüsselungscode in den verschiedenen Kommunikationsknoten ebenfalls für einen bestimmten MC-Dienst stets denselben zu wählen. Anderenfalls ist keine Koordination möglich. Die Verschlüsselungscodes wie auch die MC Daten werden dann unabhängig voneinander und somit parallel weiterbehandelt, was ineffizient wäre. Im Gegensatz zu MC-Diensten ist ein bestimmter Boadcast Dienst nur stets in einem der mehreren, das gleiche Gebiet bedienenden Kommunikationsknoten konfiguriert. Damit kommt es nicht dazu, dass mehrere Kommunikationsknoten gleichzeitig Broadcast-Daten desselben Broadcastdienstes in das gleiche Gebiet senden.

Das erfindungsgemäße Verfahren ist, wie bereits erwähnt, weitestgehend abwärts kompatibel zu UMTS und GSM/GPRS Punkt-zu-Punkt (PtP) IP Diensten. Im Falle, dass ein Kommunikationsknoten MC-Dienste entsprechend dem erfindungsgemäßen Verfahrens nicht unterstützt, so aktiviert er automatisch stattdessen einen PtP-Dienst. Wie bereits erläutert ist die Signalsierung für einen MC-Dienst fast identisch zur Signalsierung für einen PtP-Dienst. Ein Kommunikationsknoten, der die oben beschriebenen MC-Dienste nicht unterstützt, ignoriert dabei einfach das optionale Signalisierungselement MC NSAPI und aktiviert automatisch einen PtP Dienst. Ein Kommunikationsknoten, der die Bereitstellung von den beschriebenen MC-Diensten unterstützt, kann bei eingehender MC-Signalsierung ferner wählen, ob er einen PtP Dienst oder einen MC-Dienst aktiviert. Ist beispielsweise die Anzahl der mobilen Kommunikationseinheiten, die einen bestimmten MC-Dienst nutzen gering, so ist es oft effizienter einen PtP Dienst zu aktivieren anstelle eines MC-Dienstes.

Wenn nun MC- und/oder Broadcast-Daten transferiert werden müssen, so werden zwischen dem Kommunikationsknoten und den entsprechenden mobilen Kommunikationseinheiten MC und/oder Broadcast Übertragungskanäle aufgebaut. Die Aktivierung der Übertragungskanäle zwischen dem Kommunikationsknoten und den mobilen Kommunikationseinheiten beginnt sobald der Kommunikationsknoten MC- und/oder Broadcast-Daten von der betreffenden MC IP Adresse erhalten hat. Der Kommunikationsknoten schickt dann unter Angabe der MC-TMSI des betreffenden Dienstes und des Gebietes, in welchem mobile Kommunikationseinheiten sich aufhalten, die den betreffenden Dienst nutzen, eine Notifikation zum Radionetz. Im Falle eines Broadcast-Dienstes zeigt der Kommunikationsknoten in der Notifikation an, welches Gebiet in dem MC-Kontext des betreffenden Broadcast-Dienstes konfiguriert ist.

Nach Empfang einer derartigen Notifikation fordert das Radionetz den Kommunikationsknoten auf, ein oder mehrere Übertragungskanäle zwischen dem Kommunikationsknoten und dem Radionetz aufzubauen. Das Radionetz kann dabei beispielsweise für verschiedene Gebiete verschiedene Übertragungskanäle anordnen. Die Übertragungskanäle zwischen dem Kommunikationsknoten und dem Radionetz sind mit einer QoS Charakteristik aufgebaut, die dem QoS Profil des betreffenden MC- bzw. Broadcast-Dienstes entspricht und in dem zugehörigen MC Kontext angezeigt ist. Dieses QoS Profil gibt gleichzeitig auch die Anforderungen an, die an die Radioübertragungskanäle gestellt sind, d.h. an die zwischen Radionetz und den mobilen Kommunikationseinheiten aufzubauenden Übertragungskanäle.

Das Radionetz sendet dann unter Angabe der MC-TMSI des betreffenden Dienstes eine Notifikation an alle mobilen Kommunikationseinheiten, die sich in dem durch den Kommunikationsknoten angegebenen Gebiet aufhalten. Diese Notifikation kann beispielsweise mittels des bekannten "paging" Mechanismuses vorgenommen werden. Das "paging" wird dabei vorzugsweise solange in periodischen Abständen wiederholt bis die Übertragungskanäle zwischen dem Radionetz und den mobilen Kommunikationseinheiten aufgebaut sind. Nach Erhalt der Notifikation warten die betreffenden mobilen Kommunikationseinheiten eine gewisse Zeit bevor sie selber den Aufbau von Radioübertragungskanälen anfordern. Erhält eine mobile Kommunikationseinheit innerhalb dieser Zeit keine Anzeige der aufgebauten Radioübertragungskanäle, so fordert sie die Aktivierung eines Radioübertragungskanals von dem Radionetz an.

Bevorzugt baut das Radionetz Radioübertragungskanäle für MC-Dienste und Broadcast-Dienste nur in denjenigen Gebieten auf, wo es Aufforderungen von mobilen Kommunikationseinheiten erhält. Das Radionetz sendet die vom Kommunikationsknoten erhaltenen MC- und/oder Broadcast-Daten an die mobilen Kommunikationseinheiten über die entsprechenden Radioübertragungskanäle.

Sobald der Kommunikationsknoten keine weiteren Daten mehr erhält kann er vorteilhafterweise die Übertragungskanäle zwischen ihm und dem Radionetz abbauen. Dies bewirkt, dass das Radionetz ebenfalls die entsprechenden, an der Datenübertragung beteiligten Radioübertragungskanäle abbaut.

Das erfindungsgemäße Verfahren gewährleistet ferner auch bei Nutzung von MC-Diensten durch eine mobile Kommunikationseinheit dessen Mobilität. Bewegt sich eine mobile Kommunikationseinheit, die einen oder mehrere MC-Dienste aktiviert hat von dem Zuständigkeitsgebiet eines Kommunikationsknotens zu dem Zuständigkeitsgebiet eines anderen Kommunikationsknotens, so wird die weitere Bereitstellung des einen bzw. der mehreren aktivierten MC-Dienste dadurch gewährleistet, dass der für die betreffende mobile Kommunikationseinheit gespeicherte MC PDP Kontext zusammen mit den anderen für die mobile Kommunikationseinheit spezifischen Kontexte von dem alten Kommunikationsknoten zu dem neuen Kommunikationsknoten transferiert wird. Der neue Kommunikationsknoten behandelt den MC PDP Kontext wie als ob der eine oder die mehreren von der mobilen Kommunikationseinheit genutzten MC-Dienste durch die mobile Kommunikationseinheit neu aktiviert werden würden. Wurde beispielsweise ein MC-Dienst in dem neuen Kommunikationsknoten noch nicht aktiviert, so wird ein neuer für den MC-Dienst spezifischer MC Kontext aufgebaut. Wird der MC-Dienst hingegen bereits anderen mobilen Kommunikationseinheiten durch den neuen Kommunikationsknoten bereitgestellt, so existiert bereits ein MC Kontext, in welchen dann die neu hinzugekommene Kommunikationseinheit mit aufgenommen wird. Der Verschlüsselungscode kann sich eventuell ändern, was der betreffenden mobilen Kommunikationseinheit von dem neuen Kommunikationsknoten gegebenenfalls mitgeteilt wird. Ferner ist es möglich, dass die dem MC-Dienst zugeordnete MC-TMSI wechselt, was der betreffenden mobilen Kommunikationseinheit dann ebenfalls mitgeteilt wird. Im Falle, dass die QoS Fähigkeiten der mobilen Kommunikationseinheit nicht ausreichend sind, um den bzw. die MC-Dienste über den neuen Kommunikationsknoten zu nutzen, oder dass der Aufenthaltsort der mobilen Kommunikationseinheit für den bzw. die MC-Dienste nicht zulässig ist, so wird der bzw. die MC-Dienste der betreffenden mobilen Kommunikationseinheit durch den neuen Kommunikationsknoten deaktiviert.

Eine weitere Aufgabe der vorliegenden Erfindung war es, ein zur Durchführung des erfindungsgemäßen Verfahrens geeignetes Mobil-Kommunikationsnetz bereitzustellen.

Gelöst wird diese Aufgabe erfindungsgemäß durch ein Mobil-Kommunikationsnetz zur Bereitstellung von Multicast- und/oder Broadcast-Diensten, mit mindestens
a. einer MC-Quelle,
b. einem Kernnetz,
c. einem Radionetz mit einer Funkschnittstelle zur drahtlosen Übertragung der Multicast- und/oder Broadcastdaten zu zumindest einer mobilen Kommunikationseinheit (MS),
d. einem in dem Kernnetz angeordneten Kommunikationsknoten, in dem zur Steuerung der Übertragung der Multicast- und/oder Broadcastdaten eines aktivierten Multicast- und/oder Broadcastdienstes jeweils mindestens ein dienstespezifischer Kontext (MC Kontext) vorgesehen ist, der alle dienstespezifischen Parameter umfasst und zusätzlich im Falle eines Multicast-Dienstes für alle mobilen Kommunikationseinheiten, die den Multicast-Dienst aktiviert haben, jeweils ein für die entsprechende mobile Kommunikationseineinheit in Bezug auf den aktivierten Multicast-Dienst spezifischer Kontext.
e. mindestens einem in dem Radionetz angeordneten Kommunikationsknoten, in dem zur Steuerung der Übertragung der Multicast- und/oder Broadcastdaten eines aktivierten Multicast- und/oder eines konfigurierten Broadcastdienstes Notifikationen sowie MC und/oder Broadcast Radioübertragungskanäle bereitgestellt werden.

Weitere Vorteile der vorliegenden Erfindung sollen anhand der nachfolgenden Figuren aufgezeigt werden. Es zeigen
Fig. 1 als Blockschaltbild den Einsatz erfindungsgemäßer Verfahren bei der Aktivierung eines IP MC-Dienstes,
Fig. 2 als Blockschaltbild den Einsatz erfindungsgemäßer Verfahren unter Gewährleistung der Mobilität zwischen den im Kernnetz angeordneten Kommunikationsknoten,
Fig. 3 als Blockschaltbild den Einsatz erfindungsgemäßer Verfahren bei der Übertragung von MC und/oder Broadcast Daten.

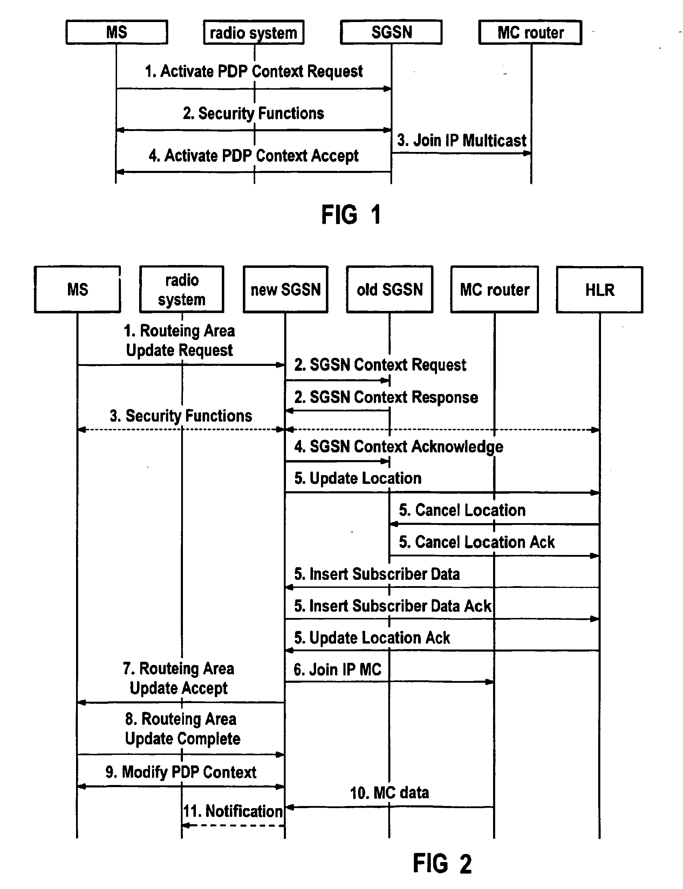

In Figur 1 ist in Form eines Blockschaltbildes die Aktivierung eines MC-Dienstes dargestellt. Der Nutzer oder eine entsprechend vorgesehene Applikation auf einer mobilen Kommunikationseinheit MS initiiert die Nutzung eines MC-Dienstes. Die mobile Kommunikationseinheit MS sendet in einem Schritt 1 ähnlich wie bei Aktivierung eines PtP-Dienstes eine Aktivierungsanforderung, einen sogenannten Activate PDP Context Request an einen zuständigen Kommunikationsknoten im Kernnetz, d.h. im Allgemeinen an einen zuständigen SGSN. Dieser Activate PDP Context Request umfasst die Angabe des Access Point Names (APN), die PDP Adresse, das QoS Profil, den erweiterten bzw. MC NSAPI und weitere für einen PtP Dienst definierte Parameter. Der APN gibt an, zu welchem Heimatnetzwerk oder zu welcher administrativen Domäne die MC IP Adresse gehört. Dies kann dazu genutzt werden, einen passenden GGSN abzuleiten, z.B. falls kein MC-Dienst sondern ein PtP Dienst aktiviert wird. Die PDP Adresse entspricht der IP MC Adresse, zu welcher die MS eine Verbindung herstellen will. Das QoS Profil gibt die QoS Fähigkeiten der MS an. Der erweiterte bzw. MC NSAPI entspricht dem Index des MC-Dienstes innerhalb des MC PDP Kontextes.

Ähnlich wie bei der Aktivierung eines PtP Dienstes können in einem Schritt 2 Sicherheitsmaßnahmen (Security Functions) vorgenommen werden, wie beispielsweise die Authentifizierung der MS.

Der Kommunikationsknoten, d.h. der SGSN überprüft, ob neben der allgemeinen GPRS Berechtigung für den angeforderten MC-Dienst eine spezielle Berechtigung gefordert wird und wenn ja, ob der Nutzer die entsprechende hat. Möglicherweise verlangt der betreffende MC-Dienst bestimmte QoS Fähigkeiten. Falls die MS diesen QoS Anforderungen nicht genügen kann, so lehnt der SGSN das Activate PDP Context Request ab. Anderenfalls kreiert der SGSN einen MC Kontext für die betreffende IP MC Adresse und überträgt die QoS Fähigkeiten der MS in das QoS Profil des MC Kontextes, wenn nicht bereits ein MC Kontext für die betreffende IP MC Adresse im SGSN existiert. Falls aber ein MC Kontext für die betreffende IP MC Adresse bereits existiert und seitens des MC-Dienstes keine besonderen QoS Anforderungen verlangt werden, vergleicht der SGSN die MS QoS Fähigkeiten mit dem QoS Profil des MC Kontextes. Jeder individuelle Parameter des QoS Profils wird dabei auf das jeweilige Minimum der entsprechenden QoS Parameter des MC Kontextes bzw. der MS QoS Fähigkeiten gesetzt. Der SGSN tritt in einem Schritt 3, der als "Join IP Multicast" bezeichnet wird, dem IP MC-Dienst für die entsprechende MC IP Adresse auf dem IP Backbone bei, falls es die erste MS ist, die diesen MC-Dienst aktiviert. Anderenfalls ist der SGSN dem IP MC-Dienst für die entsprechende MC IP Adresse auf dem IP Backbone bereits beigetreten.

Der SGSN sendet in einem Schritt 4 eine Annahmenachricht, eine sogenannte Activate PDP Context Accept, genau wie bei einem PtP Dienst an die MS. Diese Annahmenachricht enthält die MC-TMSI des angeforderten MC-Dienstes, den MC Verschlüsselungscode, den erweiterten/MC NSAPI und weitere für einen PtP Dienst definierten Parameter. Die MC-TMSI ist spezifisch für einen MC-Dienst und dient dazu, die MS von einem MC Datentransfer in Kenntnis zu setzen (Notifikation). Alle MS, die einen bestimmten MC-Dienst aktiviert haben, beobachten die Signalisierungskanäle auf Notifikationen mit der MC-TMSI des betreffenden MC-Dienstes.

In Figur 2 ist anhand eines Blockschaltbildes die Mobilität zwischen zwei Kommunikationsknoten bzw. zwischen zwei SGSNs bei der Bereitstellung von MC-Diensten dargestellt.

Eine MS bewegt sich von dem Zuständigkeitsbereich eines ersten, alten SGSNs O zu dem Zuständigkeitsbereich eines zweiten, neuen SGSNs N. Die MS sendet dabei in einem Schritt 1 eine Anforderung an den neuen SGSN N, um das Aufenthaltsgebiet (routing area) zu aktualisieren, eine sogenannte "Routing Area Update Request". Der neue SGSN N sendet in einem Schritt 2 eine Anforderung an den alten SGSN O und fordert die die MS betreffenden Kontexte, ein sogenannter Context Request. Der alte SGSN O sendet in einem Schritt 3 daraufhin alle für diese MS gespeicherten Kontexte in einer entsprechenden Antwortnachricht, der sogenannten Context Response, an den neuen SGSN N. Wiederum können in einem Schritt 4 Sicherheitsmaßnahmen (Security Functions) seitens des neuen SGSN N vorgenommen werden. Der neue SGSN N sendet in einem Schritt 5 eine Anerkennungsnachricht, eine sogenannte Context Acknowledge message, an den alten SGSN O, um anzuzeigen, dass er die Kontrolle über die MS übernommen hat. Alle Maßnahmen zur Bereitstellung der Berechtigungs- und Sicherheitsdaten in dem neuen SGSN N und zur Registrierung des neuen SGSN N im HLR werden vorgenommen. Sodann wertet der neue SGSN N die Anwesenheit der MS aus, d.h. er überprüft, ob die MS überhaupt berechtigt ist, über den neuen SGSN N Daten zu empfangen. Ferner überprüft der neue SGSN N jeden einzelnen MC-Dienst, der in dem MC PDP Kontext der betreffenden MS angegeben ist. Ist ein MC-Dienst darunter, für den in dem neuen SGSN N noch kein MC Kontext hinterlegt ist, so kreiert der neue SGSN N einen entsprechenden MC Kontext und tritt in Schritt 6 dem entsprechenden IP MC-Dienst auf dem IP Backbone bei. Falls in dem neuen SGSN N bereits MC Kontexte für, in dem MC PDP Kontext der MS aufgeführten MC-Dienste existieren, so vergleicht der neue SGSN N die jeweiligen QoS Profile seiner MC Kontexte mit dem QoS Profil der MS und passt die Parameter, wenn möglich, entsprechend an. Falls der neue SGSN N einen anderen MC-TMSI für einen bestimmten MC-Dienst verwendet als der alte SGSN O oder einen anderen Verschlüsselungscode für die MC Daten eines bestimmten MC-Dienstes, so werden die neuen Parameter der MS in einem Schritt 7 zugesendet. Vorteilhafterweise werden in allen SGSNs der gleiche MC-TMSI für die gleiche IP MC Adresse verwendet. Der neue SGSN N kann nun in einem Schritt 8 entsprechende MC Daten empfangen. Ein Handover oder eine Relocation können ebenfalls zum Wechsel des SGSN führen. Hierbei sind im Gegensatz zum oben beschriebenen SGSN Wechsel parallel zum MC-Dienst auch PtP Dienste durch die MS aktiviert. In diesem Fall findet eine Handover/Relocation Signalisierung u.a. zwischen den beiden SGSNs statt. Dabei sendet der alte SGSN O dem neuen SGSN N die PDP Kontexte der MS, damit der neue SGSN N prüfen kann, ob er diese Dienste weiterführen kann bzw. die erforderlichen Ressourcen hat. Auf diesem Wege erhält der neue SGSN N auch den MC PDP Kontext der MS. Wenn der neue SGSN N das Handover oder die Relocation akzeptiert hat, wertet er den MC PDP Kontext aus und führt die erforderlichen Aktionen in Bezug auf MC-Dienste aus.

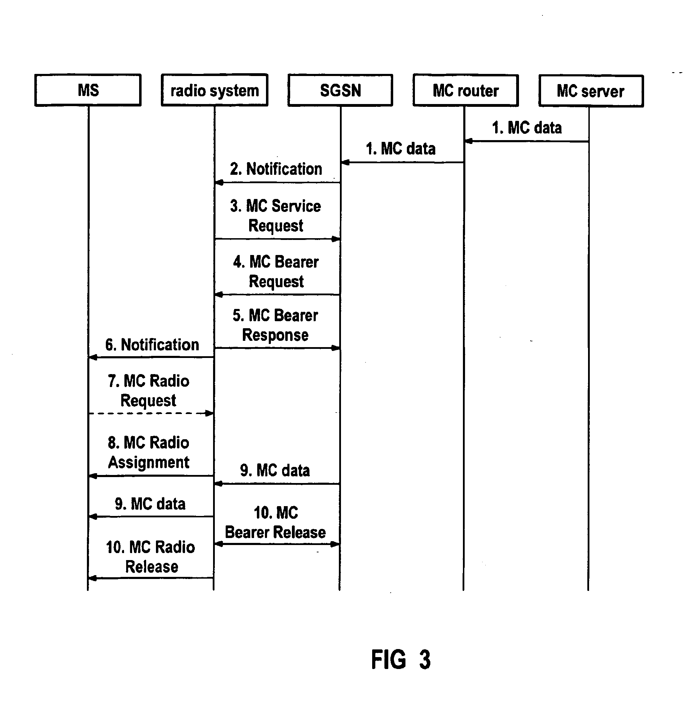

In Figur 3 ist anhand eines Blockschaltbildes ein möglicher MC Datentransfer dargestellt. Eine MC-Quelle (z.B. ein MC Server) mit einer bestimmten MC IP Adresse, die einen bestimmten MC-Dienst anbietet, sendet in einem Schritt 1 MC Daten aus, die von mindestens einem SGSN mit einem der MC IP Adresse zugeordneten MC Kontext empfangen werden. Daraufhin sendet der SGSN in einem Schritt 2 mindestens eine Notifikation bzw. eine Benachrichtigung an mindestens ein Radionetz. Diese Benachrichtigung enthält eine dem betreffenden MC-Dienst zugeordnete MC-TMSI und alle Aufenthaltsgebiete, in denen mobile Kommunikationseinheiten MSs vorhanden sind, die den betreffenden MC-Dienst aktiviert haben. Das Radionetz antwortet in einem Schritt 3 durch Senden einer oder mehrerer Anforderungen, sogenannter MC Service Requests, an den SGSN, welche den Aufbau von MC Übertragungskanäle initiieren. Möglicherweise benötigt das Radionetz mehrere MC Übertragungskanäle beispielsweise für verschiedene Aufenthaltsgebiete. Der SGSN sendet dann in einem Schritt 4 pro Anforderung eine MC Übertragungskanalanforderung, eine sogenannte MC Bearer Request Message, an das Radionetz. Diese Anforderungen enthalten die QoS Parameter, welche die MC Übertragungskanäle zwischen dem SGSN und der MS aufweisen müssen. Das Radionetz sendet pro Anforderung seitens des SGSN in einem Schritt 5 eine Antwort, eine sogenannte MC Bearer Response, an den SGSN, womit jeweils ein MC Übertragungskanal zwischen dem Radionetz und dem SGSN aufgebaut wird. Das Radionetz sendet unter Angabe der MC-TMSI Notifikationen in alle Zellen der vom SGSN vorgegebenen Aufenthaltsgebiete, in denen sich MS befinden, die den betreffenden MC-Dienst aktiviert haben. Diejenigen MS, die den betreffenden MC-Dienst aktiviert haben und eine Notifikation erhalten haben, warten eine gewisse Zeit auf eine MC Radio Anzeigenachricht (MC Radio Assignement), die den MC Radioübertragungskanal beschreibt, über welchen die MC Daten transferiert werden. Empfängt eine MS keine derartige MC Radio Anzeigenachricht, so sendet die MS in einem Schritt 7 eine Anforderung, eine sogenannte MC Radio Request, an das Radionetz, um den Aufbau eines MC Radio Übertragungskanals zu veranlassen.

Das Radionetz baut einen bzw. mehrere MC Radioübertragungskanäle auf und schickt in einem Schritt 8 eine bzw. mehrere entsprechende MC Radio Anzeigenachrichten in alle relevanten Zellen. Wenn der bzw. die MC Übertragungskanäle zwischen dem SGSN und dem Radionetz vollends aufgebaut sind, startet der SGSN in einem Schritt 9 mit der Übertragung der von der betreffenden IP MC Adresse erhaltenen MC Daten an das Radionetz. Das Radionetz schickt in einem Schritt 10 diese MC Daten dann auf den entsprechenden Radioübertragungskanal/- kanäle. Empfängt der SGSN keine weiteren MC Daten mehr, so gibt er den bzw. die MC Übertragungskanäle zum Radionetz frei bzw. diese Übertragungskanäle werden in einem Schritt 11 abgebaut (MC Bearer Release). Dies bewirkt, dass das Radionetz ebenfalls in einem Schritt 12 die entsprechenden Radioübertragungskanäle abbaut (MC Radio Release). Dies wird den betreffenden MS mitgeteilt.

## Patentansprüche

1. Verfahren zur Bereitstellung von Multicast- (MC-) und/oder Broadcast-Diensten eines ein Radio- und ein Kernnetz umfassenden Mobil-Kommunikationsnetzes, wobei das Verfahren mindestens die folgenden Schritte aufweist:
a. Übertragen von Multicast- und/oder Broadcast-Daten eines von mindestens einer mobilen Kommunikationseinheit (MS)aktivierten Multicast- (MC-) und/oder eines konfigurierten Broadcast-Dienstes von einer MC-Quelle zu der mindestens einen mobilen Kommunikationseinheit über mindestens einen in dem Kernnetz angeordneten Kommunikationsknoten (SGSN) mittels eines in dem Kommunikationsknoten (SGSN) gespeicherten dienstspezifischen Kontextes (MC Kontext),
b. Steuern und Kontrollieren der Übertragung der Multicast-Daten an die mindestens eine mobile Kommunikationseinheit durch den mindestens einen in dem Kernnetz angeordneten Kommunikationsknoten mittels eines für genau die mindestens eine mobile Kommunikationseinheit in Bezug auf den aktivierten Multicast-Dienst spezifischen und in dem Kommunikationsknoten gespeicherten Kontextes und/oder
c. Broadcasten der Broadcast-Daten des konfigurierten Broadcastdienstes in ein definiertes Gebiet.

2. Verfahren nach Anspruch 1,
**dadurch gekennzeichnet,**
**dass** der für genau die mindestens eine mobile Kommunikationseinheit (MS) spezifische Kontext zusätzlich in der mindestens einen mobilen Kommunikationseinheit (MS) gespeichert wird.

3. Verfahren nach Anspruch 1 oder 2,
**dadurch gekennzeichnet,**
**dass** der mindestens eine in dem Kernnetz angeordnete Kommunikationsknoten (SGSN) Registrierungs- und Signalisierungsfunktionen in Bezug auf den aktivierten Multicast- und/oder auf den konfigurierten Broadcastdienst übernimmt.

4. Verfahren nach Anspruch 3,
**dadurch gekennzeichnet,**
**dass** der mindestens eine in dem Kernnetz angeordnete Kommunikationsknoten (SGSN) unter Benutzung von für Punkt-zu-Punkt-Dienste (PtP-Dienste) definierte Mittel nutzerspezifische Authentifizierungs- und Autorisierungsfunktionen in Bezug auf den aktivierten Multicast-Dienst übernimmt.

5. Verfahren nach einem der vorhergehenden Ansprüche,
**dadurch gekennzeichnet,**
**dass** die Multicast- und/oder Broadcast-Daten dienstespezifisch bei der Übertragung vom Kommunikationsknoten (SGSN) zur mobilen Kommunikationseinheit (MS) mittels eines dienstespezifischen Verschlüsselungscodes verschlüsselt werden.

6. Verfahren nach einem der vorhergehenden Ansprüche,
**dadurch gekennzeichnet,**
**dass** der mindestens eine in dem Kernnetz angeordnete Kommunikationsknoten (SGSN) den Auf- und Abbau von Übertragungskanälen steuert.

7. Verfahren nach einem der vorhergehenden Ansprüche,
**dadurch gekennzeichnet,**
**dass** jedem aktivierten Multicast- und/oder konfigurierten Broadcastdienst mindestens eine dienstespezifische, vom prinzipiellen Aufbau auf einer bekannten TMSI basierende MC-TMSI zugeteilt wird.

8. Verfahren nach einem der vorhergehenden Ansprüche,
**dadurch gekennzeichnet,**
**dass** für den für die mobile Kommunikationseinheit (MS) spezifische und in dem Kommunikationsknoten (SGSN) gespeicherte Kontext ein spezifischer PDP-Kontext gewählt wird.

9. Verfahren nach einem der vorhergehenden Ansprüche,
**dadurch gekennzeichnet,**
**dass** der für die mobile Kommunikationseinheit (MS) in Bezug auf den aktivierten Multicast-Dienst spezifische und in dem Kommunikationsknoten (SGSN) gespeicherte Kontext alle für den von der mobilen Kommunikationseinheit (MS) aktivierten Multicast-Dienst spezifischen Parameter umfasst.

10. Verfahren nach Anspruch 9,
**dadurch gekennzeichnet,**
**dass** der für die mobile Kommunikationseinheit (MS) spezifische und in dem Kommunikationsknoten (SGSN) gespeicherte Kontext für alle von der mobilen Kommunikationseinheit (MS) aktivierten Multicast-Dienste jeweils alle spezifischen Parameter umfasst.

11. Verfahren nach einem der vorhergehenden Ansprüche,
**dadurch gekennzeichnet,**
**dass** der in dem Kommunikationsknoten (SGSN) gespeicherte dienstspezifische Kontext (MC Kontext) alle für den Dienst spezifische Parameter umfasst.

12. Verfahren nach Anspruch 11,
**dadurch gekennzeichnet,**
**dass** im Falle eine Multicast-Dienstes der MC Kontext eine Liste derjenigen mobilen Kommunikationseinheiten (MS) aufweist, die den Multicast-Dienst aktiviert haben.

13. Verfahren nach einem der vorhergehenden Ansprüche,
**dadurch gekennzeichnet,**
**dass** im Falle eines Multicast-Dienstes zur Aktivierung des Multicast-Dienst eine PtP-Signalisierung zwischen der mindestens einen mobilen Kommunikationseinheit (MS) und dem Kommunikationsknoten (SGSN) verwendet wird, die einen erweiterten oder MC NSAPI umfasst.

14. Mobil-Kommunikationsnetz zur Bereitstellung von Multicast- und/oder Broadcast-Diensten, mit mindestens
a. einer MC-Quelle,
b. einem Kernnetz,
c. einem Radionetz mit einer Funkschnittstelle zur drahtlosen Übertragung der Multicast- und/oder Broadcastdaten zu zumindest einer mobilen Kommunikationseinheit (MS),
d. einem in dem Kernnetz angeordneten Kommunikationsknoten, in dem zur Steuerung der Übertragung der Multicast- und/oder Broadcastdaten eines aktivierten Multicast- und/oder konfigurierten Broadcastdienstes jeweils mindestens ein dienstespezifischer Kontext (MC Kontext) vorgesehen ist, der alle dienstespezifischen Parameter umfasst und zusätzlich im Falle eines Multicast-Dienstes für alle mobilen Kommunikationseinheiten (MS), die den Multicast-Dienst aktiviert haben, jeweils ein für die entsprechende mobile Kommunikationseineinheit (MS) in Bezug auf den aktivierten Multicast-Dienst spezifischer Kontext.
e. einem in dem Radionetz angeordneten Kommunikationsknoten, in dem zur Steuerung der Übertragung der Multicast- und/oder Broadcastdaten eines aktivierten Multicast- und/oder eines konfigurierten Broadcastdienstes Notifikationen sowie MC und/oder Broadcast Radioübertragungskanäle bereitgestellt werden.

## Claims

1. Method for provision of multicast (MC) and/or broadcast services in a mobile communications network which comprises a radio network and a core network, with the method having at least the following steps:
a. transmission of multicast and/or broadcast data for a multicast service (MC) which is activated by at least one mobile communication unit (MS), and/or for a configured broadcast service from an MC source to the at least one mobile communication unit via at least one communication node (SGSN), which is arranged in the core network, by means of a service-specific context (MC context) which is stored in the communication node (SGSN),
b. control and monitoring of the transmission of the multicast data to the at least one mobile communication unit through the at least one communication node, which is arranged in the core network, by means of a context which is stored in the communication node and is specific for precisely that at least one mobile communication unit with reference to the activated multicast service, and/or
c. broadcasting of the broadcast data for the configured broadcast service in a defined region.

2. Method according to Claim 1,
**characterized**
**in that** the context which is specific for precisely that at least one mobile communication unit (MS) is additionally stored in the at least one mobile communication unit (MS).

3. Method according to Claim 1 or 2,
**characterized**
**in that** the at least one communication node (SGSN) which is arranged in the core network carries out registration and signaling functions with respect to the activated multicast service, and/or with respect to the configured broadcast service.

4. Method according to Claim 3,
**characterized**
**in that** the at least one communication node (SGSN) which is arranged in the core network carries out user-specific authentication and authorization functions with respect to the activated multicast service, using means which are defined for point-to-point services (PtP services).

5. Method according to one of the preceding claims,
**characterized**
**in that** the multicast and/or broadcast data is encrypted on a service-specific basis by means of a service-specific encryption code for the transmission from the communication node (SGSN) to the mobile communication unit (MS).

6. Method according to one of the preceding claims,
**characterized**
**in that** the at least one communication node (SGSN) which is arranged in the core network controls the setting up and clearing of transmission channels.

7. Method according to one of the preceding claims,
**characterized**
**in that** each activated multicast and/or configured broadcast service is allocated at least one service-specific MC-TMSI, which is based on the fundamental configuration of a known TMSI.

8. Method according to one of the preceding claims,
**characterized**
**in that** a specific PDP context is selected for the context which is specific for the mobile communication unit (MS) and is stored in the communication node (SGSN).

9. Method according to one of the preceding claims,
**characterized**
**in that** the context which is specific for the mobile communication unit (MS) with respect to the activated multicast service and is stored in the communication node (SGSN) comprises all of the parameters which are specific for the multicast service which is activated by the mobile communication unit (MS).

10. Method according to Claim 9,
**characterized**
**in that** the context which is specific for the mobile communication unit (MS) and is stored in the communication node (SGSN) in each case comprises all of the specific parameters for all of the multicast services which are activated by the mobile communication unit (MS).

11. Method according to one of the preceding claims,
**characterized**
**in that** the service-specific context (MC context) which is stored in the communication node (SGSN) comprises all of the parameters which are specific for that service.

12. Method according to Claim 11,
**characterized**
**in that**, in the case of a multicast service, the MC context has a list of those mobile communication units (MS) which have activated the multicast service.

13. Method according to one of the preceding claims,
**characterized**
**in that**, in the case of a multicast service, PtP signaling is used between the at least one mobile communication unit (MS) and the communication node (SGSN) in order to activate the multicast service, and comprises extended or MC NSAPI.

14. Mobile communications network for provision of multicast and/or broadcast services, having at least
a. an MC source,
b. a core network,
c. a radio network with a radio interface for wire-free transmission of multicast and/or broadcast data to at least one mobile communication unit (MS),
d. a communication node which is arranged in the core network and in which in each case at least one service-specific context (MC context) is provided for controlling the transmission of the multicast and/or broadcast data for an activated multicast and/or configured broadcast service, which service-specific context (MC context) comprises all the service-specific parameters and, additionally in the case of a multicast service, in each case one context, which is specific for the corresponding mobile communication unit (MS) with respect to the activated multicast service, for all of the mobile communication units (MS)
which have activated the multicast service.
e. a communication node which is arranged in the radio network and in which notifications as well as MC and/or broadcast radio transmission channels are provided for controlling the transmission of the multicast and/or broadcast data for an activated multicast and/or a configured broadcast service.

## Revendications

1. Procédé pour la mise à disposition de services multidestinations (MC) et/ou de diffusion d'un réseau de communication mobile comprenant un réseau radio et un réseau central, le procédé présentant au moins les étapes suivantes :
a. transmission de données multidestinations et/ou de données de diffusion d'un service multidestinations (MC) activée par au moins une unité de communication mobile (MS) et/ou d'un service de diffusion configuré d'une source MC à la au moins une unité de communication mobile par au moins un noeud de communication (SGSN) disposé dans le réseau central au moyen d'un contexte (contexte MC) spécifique au service et stocké dans le noeud de communication (SGSN),
b. commande et contrôle de la transmission des données multidestinations à la au moins une unité de communication mobile par le au moins un noeud de communication disposé dans le réseau central au moyen d'un contexte spécifique pour exactement la au moins une unité de communication par rapport au service multidestinations activé et stocké dans le noeud de communication et/ou
c. diffusion des données de diffusion du service de diffusion configuré dans un domaine défini.

2. Procédé selon la revendication 1,
**caractérisé en ce que**
le contexte spécifique pour exactement la au moins une unité de communication mobile (MS) est stocké en supplément dans la au moins une unité de communication mobile (MS).

3. Procédé selon la revendication 1 ou 2,
**caractérisé en ce que**
le au moins un noeud de communication (SGSN) disposé dans le réseau central prend en charge des fonctions d'enregistrement et de signalisation par rapport au service multidestinations activé et/ou au service de diffusion configuré.

4. Procédé selon la revendication 3,
**caractérisé en ce que**
le au moins un noeud de communication (SGSN) disposé dans le réseau central prend en charge avec l'utilisation de moyens définis pour des services point à point (services PtP) des fonctions d'authentification et d'autorisation spécifiques à l'utilisateur par rapport au service multidestinations activé.

5. Procédé selon l'une quelconque des revendications précédentes,
**caractérisé en ce que**
les données multidestinations et/ou les données de diffusion sont prévues de façon spécifique au service lors de la transmission du noeud de communication (SGSN) à l'unité de communication mobile (MS) au moyen d'un code de codage spécifique au service.

6. Procédé selon l'une quelconque des revendications précédentes,
**caractérisé en ce que**
le au moins un noeud de communication (SGSN) disposé dans le réseau central commande la mise en place et la suppression de canaux de transmission.

7. Procédé selon l'une quelconque des revendications précédentes,
**caractérisé en ce que**
au moins une MC-TMSI spécifique au service, basée du point de vue de la structure de principe sur une TMSI connue, est attribuée à chaque service multidestinations activé et/ou service de diffusion configuré.

8. Procédé selon l'une quelconque des revendications précédentes,
**caractérisé en ce que**
un contexte PDP spécifique est choisi pour le contexte spécifique à l'unité de communication mobile (MS) et stocké dans le noeud de communication (SGSN).

9. Procédé selon l'une quelconque des revendications précédentes,
**caractérisé en ce que**
le contexte spécifique à l'unité de communication mobile (MS) par rapport au service multidestinations activé et stocké dans le noeud de communication (SGSN) comporte tous les paramètres spécifiques au service multidestinations activé par l'unité de communication mobile (MS).

10. Procédé selon la revendication 9,
**caractérisé en ce que**
le contexte spécifique à l'unité de communication mobile (MS) et stocké dans le noeud de communication (SGSN) comporte respectivement tous les paramètres spécifiques pour tous les services multidestinations activés par l'unité de communication mobile (MS).

11. Procédé selon l'une quelconque des revendications précédentes,
**caractérisé en ce que**
le contexte (contexte MC) spécifique au service et stocké dans le noeud de communication (SGSN) comporte tous les paramètres spécifiques au service.

12. Procédé selon la revendication 11,
**caractérisé en ce que**,
dans le cas d'un service multidestinations, le contexte MC présente une liste des unités de communication mobiles (MS) qui ont activé le service multidestinations.

13. Procédé selon l'une quelconque des revendications précédentes,
**caractérisé en ce que**,
dans le cas d'un service multidestinations et pour l'activation du service multidestinations, une signalisation PtP est utilisée entre la au moins une unité de communication mobile (MS) et le noeud de communication (SGSN), laquelle signalisation comporte un NSAPI élargi ou un MC NSAPI.

14. Réseau de communication mobile pour la mise à disposition de services multidestinations et/ou de services de diffusion, comprenant au moins
a. une source MC
b. un réseau central
c. un réseau radio avec une interface radio pour la transmission sans fil des données multidestinations et/ou des données de diffusion à au moins une unité de communication mobile (MS),
d. un noeud de communication disposé dans le réseau central, dans lequel, pour la commande de la transmission des données multidestinations et/ou des données de diffusion d'un service multidestinations activé et/ou d'un service de diffusion configuré, il est prévu à chaque fois au moins un contexte spécifique au service (contexte MC), qui comporte tous les paramètres spécifiques au service et en supplément dans le cas d'un service multidestinations pour toutes les unités de communication mobiles (MS), qui ont activé le service multidestinations, à chaque fois un contexte spécifique à l'unité de communication mobile (MS) correspondante par rapport au service multidestinations activé.
e. un noeud de communication disposé dans le réseau radio, dans lequel, pour la commande de la transmission des données multidestinations et/ou des données de diffusion d'un service multidestinations activé et/ou d'un service de diffusion configuré, on met à disposition des notifications ainsi que MC et/ou des canaux de transmission radio/diffusion.
